# EUROPEAN PATENT SPECIFICATION

(11) **EP 3 497 373 B1**
(45) Date of publication and mention of the grant of the patent: **14.07.2021**
(21) Application number: 17754465.7
(22) Date of filing: 08.08.2017
(51) Int. Cl.: F24D 3/14, E04F 15/00

(54) **HEAT TRANSFER PANEL**
WÄRMEÜBERTRAGUNGSPLATTE
PANNEAU DE TRANSFERT DE CHALEUR

(30) Priority: 10.08.2016 GB 201613739
(43) Date of publication of application: 19.06.2019
(73) Proprietor: Omnie Limited, Exeter Devon EX2 5GL (GB)
(72) Inventor: TRIVETT, Darren, Exeter Devon EX2 5GL (GB)
(74) Representative: Script IP Limited
(86) International application number: PCT/GB2017/052333
(87) International publication number: WO 2018/029461

(56) References cited:
- WO-A1-02/37032
- DE-U1- 20 013 462
- DE-U1- 20 021 121
- GB-A- 2 508 018
- JP-A- H11 270 862
- JP-A- 2008 122 014
- US-A1- 2003 218 075
- US-A1- 2014 367 477

## Description

### FIELD OF THE INVENTION

This invention relates to heat transfer panels of the kind which are used in the installation of surface heating and cooling systems, of which underfloor heating systems are presently the most common example.

### BACKGROUND

Diffuser plates are commonly used for distribution of heat in dry construction floors (i.e. those without a concrete screed). Diffuser plates are typically made from aluminium or an alloy of aluminium and are pressed into a channel to accept a pipe flanked by wings which transfer heat into the floor. The diffuser plate can either sit into routed insulation or is fixed directly to the battens or joists of a floor. In all instances a covering is laid over the plates, e.g. a floor deck such as chipboard in an underfloor heating system.

A diffuser plate may have two pressed channels for pipes and be fixed to the top of battens or joists within a suspended floor. Insulation is laid loose below the diffuser plate. Diffuser plates are rigid and the pipe can only be inserted where a channel has been formed. This means that the pipe can only enter and leave the plate at the ends making it difficult to lay pipe around obstructions and maintain the pipe in a diffuser plate. The plates have a hard temper to provide more rigidity and are usually between 0.7mm to 1mm thick, although if the plates are not structural they can be as thin as 0.25mm and bonded into insulation. Nevertheless, they are all very difficult to trim on site. For this reason diffuser plates are only used where there is a straight length of pipe, and any curves or bends in the pipe cannot have a diffuser plate installed. Where there is no diffuser plate there is no significant contribution to the heat transfer. Depending on room size, curves and bends typically occupy 20% of the room. In bathrooms where room area is smaller it can be greater than 50%.

Conventionally pipe work is installed in straight runs with curves (where the pipe turns 180 degrees to travel back down the room) at the periphery of the room. In a suspended floor the pipe must pass through the joist. The pipe often crosses the joist in an area that can contravene building regulations (if the joists are not oversized). Joists can be notched between 7% and 25% of the joist length from the point of support. If the pipe work of a conventional system with diffuser plates were to pass through the joists in the correct place the plates would need to be trimmed where the pipe bends through the joist. As a result, the unheated area would significantly increase from 20% to 40%. Alternative methods of putting heating into dry construction floors involve using a combination of straight and curve panels, laid such as to be able to install the pipe in a serpentine fashion (going up and down within a room). These products are usually supplied as "straights" and "curves", with a set of curves placed perpendicular to the straights. Having to use different products makes preparation of a bill-of-materials and consequent installation difficult. In non-rectangular rooms it is difficult to apply this method without significant trimming and repositioning of the curve panels.

GB2508018A discloses a flexible conduit for heat transfer applications comprising a flexible tube for conducting a heat transfer fluid, a sheath of heat conducting material fixed to the outer surface of the tube and having a means of flexing such that the sheath is at least flexible as the tube. The conduit may be located in an omega shaped channel, the sheath may be compressed, may be located in various clips, and may be laid in a castellated layer supporting the tube.

US2014367477 (A1) discloses a sub-flooring panel with improved impact and/or sound deadening (ISD) properties that is adapted to adjoin other sub-flooring panels to form a sub-flooring panel assembly, includes a base body having an upper surface formed with a groove for receiving a heating/cooling element, such as hydronic piping. A sub-flooring system with significantly improved ISD properties includes the panel assembly and an underlayment assembly which comprises a plurality of stabilizing supports, each support being adjustable in height, to support at least a generally rigid board and a fibreboard on which finishing flooring or laminate may be installed.

JPH11270862 discloses, in a panel, a groove for fitting a pipe for heating medium circulation is formed in a heat insulator, and a radiating sheet is bonded to the heat insulator for forming a base for a floor-heating panel while the groove is covered. In the radiating sheet, in the position corresponding to approximately a centre part in a width direction of the groove, machine-sewed seams are formed along the groove in advance.

WO0237032 discloses a modular panel consisting of thermal insulation material for laying in underfloor or wall heating systems. Said panel comprises a flat rectangular base body and cavities for accommodating thermal conduits. The cavities are configured as a grid-type arrangement of channels, consisting of several intersecting, rectilinear channels that run parallel to the lateral edges, several rectilinear channels that likewise intersect and run diagonally and at least two rows of arched channel sections, positioned mirror-symmetrically, the vertexes of said arched channel sections facing towards the lateral edges and the respective ends of said sections being connected to the rectilinear channels. The intersecting channels that run parallel to the lateral edges are located at equal distances from one another. The channels running diagonally intersect at intersection points, said channels are equidistant - measured diagonally - from the intersection points of the channels that run parallel to the lateral edges.

The present invention seeks to make installation of surface heating and cooling panels easier enabling greater flexibility in the installation of pipe work.

### SUMMARY

The present invention proposes a heat transfer panel as claimed in claim 1.

To improve heat transfer between the pipe and the heat-conducting layer the fissure lines follow a meandering path along the channels, varying in distance from the margins of the underlying channel. Heat transfer may be further improved if the heat-conducting layer includes a plurality of superimposed sheets. The fissure lines of the different sheets preferably cross at intervals and travel adjacent to the sides of the underlying channel at different positions.

The heat-conducting layer may comprise sheets of metal foil which are typically less than 0.25mm thick.

The body of structural support material may incorporate a multiplicity of gas spaces to provide good thermal insulation properties.

The channels are preferably provided with opposing inwardly-directed lips to help retain a pipe within the channels and provide improved heat transfer.

The channels preferably form a pattern comprising substantially parallel straight lines joined by curves. The pattern may include two intersecting sets of substantially parallel straight lines, and the curves may be formed by rings which intercept both sets of lines.

The channels preferably form a pattern of intersecting straight lines intercepted by circles.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general view of a heat transfer panel in accordance with the invention, showing an edge portion of the panel;
Figure 2 is a similar view to Fig. 1 but showing only the lower support layer of the panel;
Figure 3 is a plan view of the support layer of an entire panel;
Figure 4 is a plan view of the panel complete with its upper heat-conducting layer; and
Figure 5 is a plan view of a typical installation which incorporates the panel.

### DESCRIPTION OF THE EMBODIMENTS

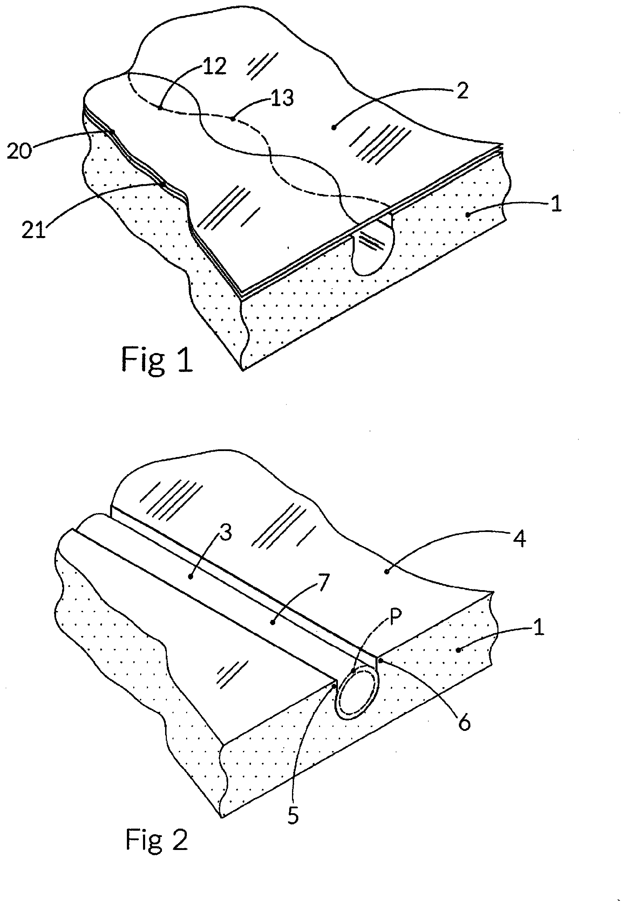

Referring firstly to Fig. 1, the heat transfer panel of the present invention includes a support board 1 which is covered by a relatively thin heat- conducting layer 2. The board is formed of a suitable rigid or slightly flexible structural material. The board will normally be required to provide a layer of thermal insulation. In such cases the board will usually incorporate a multiplicity of spaces filled with air, argon or another suitable gas since this reduces the overall weight of the panel as well as providing good heat insulation properties. Suitable materials might therefore include foamed plastics and materials of a fibrous nature. In other applications the main requirement might be to provide sound insulation for example, in which case a solid dense board might be better.

As best seen in Fig. 2, the board 1 is formed with an array of interconnecting channels 3 into which a flexible fluid-conducting pipe P can be inserted. In the orientation shown, the channels 3 open through upper surface 4 of the board, although the board can, of course, be used in any orientation. Although the channels may be of U-shaped cross-section, in the preferred configuration shown in the drawings the channels are horseshoe shaped with opposing inwardly-extending lips 5 and 6 flanking an open mouth 7, the reason for which is discussed below.

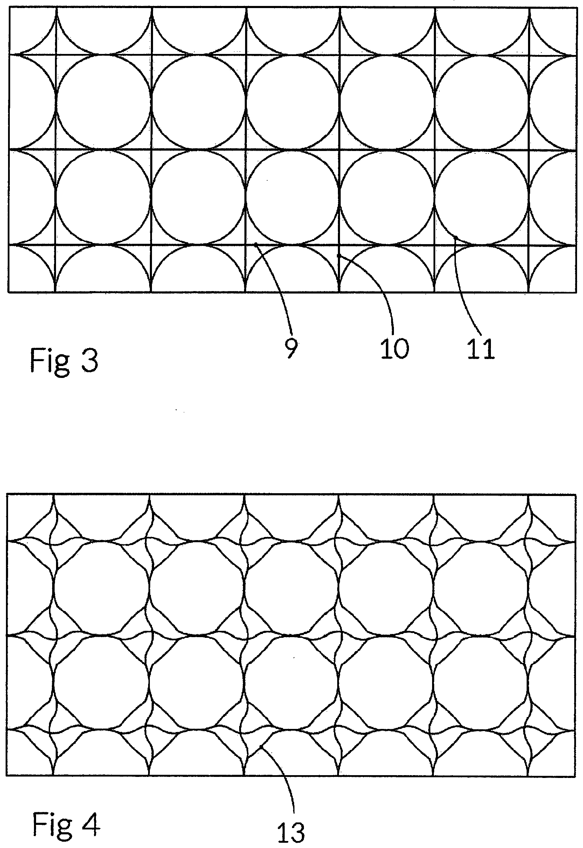

Fig. 3 shows a preferred layout for the channels 3, although it is important to note that this is only by way of illustration and other useful patterns could be devised. In the illustrated configuration the pattern includes two intersecting sets of straight lines, 9 and 10, and interconnecting circles 11.

The straight lines 9 and 10 are parallel and equally spaced, and the two sets of lines are mutually perpendicular to form a grid of squares which each contains a circle 11 intercepting the four sides of the square at their mid points. At the sides of the panel the circles 11 are bisected by the edges of the panel leaving only half-circles, with quarter-circles remaining at the four corners.

Returning to Fig. 1, the heat-conducting layer 2 is formed from one or more sheets of a bendable metal foil, e.g. of aluminium or copper, which can be much thinner than conventional diffuser plates, typically only 200um thick. The metal foil is bonded to the surface 4 in any suitable manner forming a substantially planar layer which spans the channels 3 and completely covers them prior to use. Although the heat-conducting layer 2 could comprise only a single sheet of foil the layer preferably comprises at least two superimposed sheets, and in Fig. 1 there are two sheets 20 and 21, the lower of which 21 is bonded directly to the board 1. Each sheet of foil 20, 21 is provided with respective fissure lines 12 and 13 which extend along the channels 3, formed for example by cuts, score lines or rows of perforations. In the preferred configuration the fissure lines meander within the width of the channels, so that in the illustrated embodiment the lines of weakness follow a wavy path. Furthermore, the wavy fissure lines 12 and 13 are offset from each other such that they cross at intervals and travel adjacent to the sides of the channel at different positions along the channel. In the case of two foil sheets the two lines 12 and 13 are preferably a mirror image of each other.

As can be seen in Fig. 4, the lines 12 of the upper sheet 20 provide a visual indication of the position of the underlying channel. During installation of the panel the fissure lines 12 and 13 allow the heat-conducting layer 2 to be split along the required sections of the channel 3 to allow a length of the pipe P to be inserted into the selected channels in a desired configuration. Due to the meandering path of the fissure lines the foil layer forms flaps on opposite sides of the channel which are deflected inwards as the pipe is inserted to become sandwiched between the pipe and the walls of the channel. By using two or more sheets the flaps form a substantially continuous lining along each side of the channel and extend to the bottom of the channel, which would not be achieved using a single sheet of metal foil. Furthermore, if the foil was cut straight down the centre of a channel there will be very little, if any, metal in contact with the pipe. Taking a 15 mm diameter pipe as an example, the flap would be 7.5 mm wide which, when pushed into the channel, will only meet the pipe at the point where the pipe first touches the insulation layer, 7.5 mm from the surface. The inwardly-extending lips 5 and 6 also improve heat transfer as well as helping to positively retain the pipe within the channel.

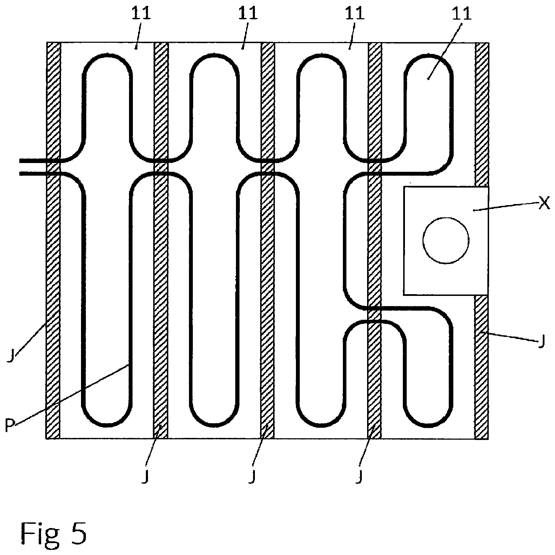

The panel can easily be cut into smaller sections for use in any particular application. An important feature of the present heat transfer panel is the ability to form 180 degree bends at opposite ends of two straight runs of pipe whilst still maintaining efficient thermal contact with the heat- conductive layer. This is achieved by running the pipe around one half of a circle 11 between two parallel straight sections 9 or 10. Thus, as shown in Fig. 5 for example, sections S of the panel can be mounted between joists J. The pipe P can be routed entirely within the panel sections except when crossing joists, where the pipe exits from the edges via selected part circles 11 or appropriate straight sections 9 and 10.

Fig. 5 also shows how the panels allow the pipe work to leave the panel and pass through a joist at any convenient position enabling the installer to comply with building regulations without trimming or leaving plates out, thereby reducing the heat transfer capability of the system.

Fig. 5 further demonstrates how the pipe can easily be routed around an obstacle X.

The pipe can be used to carry either warm or cool water or any other suitable fluid. The contact between the pipe and the conductive layer enables heat to be transferred to or from the overlying structure (floor, ceiling etc.) either in a heating system where warm water is circulated through the pipes or for heat to be extracted from the structure in a cooling system where cool water is circulated through the pipes.

The heat transfer panel has many advantages over conventional products. Since the panel is universal (no "straights" and "curves") a single product can be used for an entire floor. Therefore the quantities needed are very easy to calculate from the room area. Design and installation is also greatly simplified for smaller rooms with obstacles. The panel allows pipe to be installed in any direction so that the pipe can be run around obstacles. Different panels are not needed, nor the manipulation or trimming of panels. Importantly, the panel will maintain heat transfer in this area whereas conventional diffuser plate systems will not. Non-rectangular rooms with straights and curves are also greatly simplified. The panel is installed and trimmed in the same way as a normal insulation or flooring product. Only a simple design is required to show where the pipe work may go.

As the pipe inside the heat transfer panel is consistently in contact with an adjacent area of the conductive material via the flaps created when the pipe is pushed in, there is efficient heat transfer in all areas. With curves or bends in conventional diffuser plate systems this is not the case and there is a significant reduction in heat output from these areas.

Whilst the above description places emphasis on the areas which are believed to be new and addresses specific problems which have been identified, it is intended that the features disclosed herein may be used in any combination within the scope of the appendant claims.

## Claims

1. A heat transfer panel comprising a body (i) of structural support material having a surface (4) formed with an array of interconnecting channels (3) into which a flexible fluid-conducting pipe (P) can be inserted, and in which a heat-conducting layer (20; 21) is applied to said surface spanning the channels prior to use, said layer being provided with fissure lines (12; 13) extending along the channels whereby the layer can be divided to allow insertion of a pipe into selected channels, wherein the fissure lines follow a meandering path along the channels, varying in distance from the margins (5; 6) of the underlying channel.

2. A heat transfer panel according to Claim 1 in which the heat-conducting layer includes a plurality of superimposed sheets.

3. A heat transfer panel according to Claims 1 and 2 in which the fissure lines of the different sheets cross at intervals and travel adjacent to the sides of the underlying channel at different positions.

4. A heat transfer panel according to Claim 3 in which the heat- conducting layer comprises two sheets with respective fissure lines, and one fissure line is a mirror image of the other.

5. A heat transfer panel according to any preceding claim in which the or each sheet comprised in the heat-conducting layer is less than 0.25 mm thick.

6. A heat transfer panel according to any preceding claim in which the body of structural support material incorporates a multiplicity of gas spaces.

7. A heat transfer panel according to any preceding claim in which the body of structural support material is formed from a cellular plastics material.

8. A heat transfer panel according to any of Claims 1 to 6 in which the body of structural support material is of a fibrous nature.

9. A heat transfer panel according to any preceding claim in which the channels are provided with opposing inwardly-directed lips.

10. A heat transfer panel according to any preceding claim in which the channels form a pattern comprising substantially parallel straight lines (9; 10) joined by curves (11).

11. A heat transfer panel according to Claim 10 in which the pattern comprises two intersecting sets of substantially parallel straight lines.

12. A heat transfer panel according to Claim 11 in which the curves are formed by rings which intercept both sets of lines.

## Patentansprüche

1. Wärmeübertragungsplatte, die einen Körper (1) aus einem strukturellen Verstärkungsmaterial mit einer Oberfläche (4) umfasst, der mit einer Anordnung aus miteinander verbundenen Kanälen (3) versehen ist, in denen ein flexibles fluidleitendes Rohr (P) eingelegt werden kann, und in der eine Wärmeleitschicht (20; 21) auf die Oberfläche aufgebracht ist, die vor dem Einsatz die Kanäle überspannt, wobei die Schicht mit Sollbruchlinien (12; 13) versehen ist, die die Kanäle entlang verlaufen, wodurch die Schicht zertrennt werden kann, damit ein Rohr in ausgewählte Kanäle eingelegt werden kann, wobei die Sollbruchlinien entlang der Kanäle einen gewundenen Weg nehmen, deren Abstand zu den Rändern (5; 6) des darunterliegenden Kanals unterschiedlich ist.

2. Wärmeübertragungsplatte nach Anspruch 1, in der die Wärmeleitschicht eine Vielzahl von übereinanderliegenden Lagen beinhaltet.

3. Wärmeübertragungsplatte nach Anspruch 1 und 2, in der sich die Sollbruchlinien der verschiedenen Lagen in Abständen kreuzen und angrenzend an die Seiten des darunterliegenden Kanals an unterschiedlichen Positionen verlaufen.

4. Wärmeübertragungsplatte nach Anspruch 3, in der die Wärmeleitschicht zwei Bleche mit entsprechenden Sollbruchlinien umfasst und eine Sollbruchlinie spiegelbildlich zu der anderen ist.

5. Wärmeübertragungsplatte nach einem vorstehenden Anspruch, in der die oder jede Lage, die die Wärmeleitschicht umfasst, unter 0,25 mm stark ist.

6. Wärmeübertragungsplatte nach einem vorstehenden Anspruch, in der in dem Körper aus einem strukturellen Verstärkungsmaterial eine Mehrzahl von Gasräumen aufgenommen ist.

7. Wärmeübertragungsplatte nach einem vorstehenden Anspruch, in der der Körper aus einem strukturellen Verstärkungsmaterial aus einem Zellkunststoff gebildet ist.

8. Wärmeübertragungsplatte nach einem der Ansprüche 1 bis 6, in der der Körper aus einem strukturellen Verstärkungsmaterial faserhaltig ist.

9. Wärmeübertragungsplatte nach einem vorstehenden Anspruch, in der die Kanäle mit gegenüberliegenden nach innen gerichteten Lippen versehen sind.

10. Wärmeübertragungsplatte nach einem vorstehenden Anspruch, in der die Kanäle ein Muster bilden, das im Wesentlichen parallele gerade Linien (9; 10) umfasst, die durch Bögen (11) verbunden sind.

11. Wärmeübertragungsplatte nach Anspruch 10, in der das Muster zwei sich schneidende Gruppen aus im Wesentlichen parallelen geraden Linien umfasst.

12. Wärmeübertragungsplatte nach Anspruch 11, in der die Bögen von Ringen gebildet sind, die beide Gruppen von Linien abschneiden.

## Revendications

1. Panneau de transfert de chaleur comprenant un corps (1) en matériau de support structural présentant une surface (4) formée d'un réseau de canaux d'interconnexion (3) dans lesquels un tuyau conducteur de fluide flexible (P) peut être inséré, et dans lequel une couche conductrice de chaleur (20 ; 21) est appliquée sur ladite surface en couvrant les canaux avant utilisation, ladite couche étant dotée de lignes de fissure (12 ; 13) s'étendant le long des canaux selon lesquelles la couche peut être divisée pour permettre une insertion d'un tuyau dans des canaux sélectionnés, dans lequel les lignes de fissure suivent un chemin sinueux le long des canaux, variant en distance à partir des marges (5 ; 6) du canal sous-jacent.

2. Panneau de transfert de chaleur selon la revendication 1 dans lequel la couche conductrice de chaleur inclut une pluralité de feuilles superposées.

3. Panneau de transfert de chaleur selon les revendications 1 et 2 dans lequel les lignes de fissure des différentes feuilles se croisent à intervalles et circulent de manière adjacente aux côtés du canal sous-jacent à différentes positions.

4. Panneau de transfert de chaleur selon la revendication 3 dans lequel la couche conductrice de chaleur comprend deux feuilles avec des lignes de fissure respectives, et une ligne de fissure est une image miroir de l'autre.

5. Panneau de transfert de chaleur selon une quelconque revendication précédente dans lequel la ou chaque feuille comprise dans la couche conductrice de chaleur fait moins de 0,25 mm d'épaisseur.

6. Panneau de transfert de chaleur selon une quelconque revendication précédente dans lequel le corps en matériau de support structural incorpore une multiplicité d'espaces de gaz.

7. Panneau de transfert de chaleur selon une quelconque revendication précédente dans lequel le corps en matériau de support structural est formé à partir d'une matière plastique cellulaire.

8. Panneau de transfert de chaleur selon l'une quelconque des revendications 1 à 6 dans lequel le corps en matériau de support structural est d'une nature fibreuse.

9. Panneau de transfert de chaleur selon une quelconque revendication précédente dans lequel les canaux sont dotés de lèvres opposées dirigées vers l'intérieur.

10. Panneau de transfert de chaleur selon une quelconque revendication précédente dans lequel les canaux forment un motif comprenant des lignes droites sensiblement parallèles (9 ; 10) reliées par des courbes (11).

11. Panneau de transfert de chaleur selon la revendication 10 dans lequel le motif comprend deux ensembles qui se croisent de lignes droites sensiblement parallèles.

12. Panneau de transfert de chaleur selon la revendication 11 dans lequel les courbes sont formées par des anneaux qui croisent les deux ensembles de lignes.
